# EUROPÄISCHE PATENTANMELDUNG

(11) **EP 4 417 892 A1**
(43) Veröffentlichungstag der Anmeldung: **21.08.2024**
(21) Anmeldenummer: 24157002.7
(22) Anmeldetag: 12.02.2024
(51) Int. Cl.: F24H 4/00, F24F 13/22, F24H 8/00, F25B 49/00, B01D 53/26

(54) **KONDENSATABLAUF FÜR EINEN HEIZGERÄT, GEHÄUSE EINES HEIZGERÄTES UND HEIZGERÄT**

(30) Priorität: 15.02.2023 DE 102023103655
(71) Anmelder: Vaillant GmbH, 42859 Remscheid NRW (DE)
(72) Erfinder: Riecke, Harald, 42853 Remscheid (DE)
(74) Vertreter: Popp, Carsten

(57) **Zusammenfassung**

Vorgeschlagen wird ein Kondensatablauf (6) für ein Heizgerät (1), dazu eingerichtet im Inneren eines Gehäuses (3) des Heizgerätes (1) auftretendes Kondensat in einen Bereich außerhalb des Gehäuses (3) abzuleiten, umfassend zumindest einen Teilbereich, in dem ein Absorptionsmittel enthalten ist. Vorteilhaft kann so ein Austreten von gefährlichem (brennbaren) Kältemittel aus dem Gehäuse (3) verhindert werden. Zudem werden ein Gehäuse (3) eines Heizgerätes (1) und ein Heizgerät (1) vorgeschlagen.

## Beschreibung

Die Erfindung betrifft einen Kondensatablauf für ein Heizgerät, ein Gehäuse für ein Heizgerät und ein Heizgerät.

Zunehmend gewinnen Heizgeräte, die keine fossilen Energieträger verbrennen, an Bedeutung. Hierbei sind insbesondere Wärmepumpen zu nennen, die mittels eines Kältekreises einem Umgebungsmedium, wie Grundwasser, Erdwärme oder Umgebungsluft, Wärme entziehen und durch Übertragung auf einen Heizkreislauf oder eine Warmwasserversorgung nutzbar machen.

Nachteilig haben die, in den Kältekreisen verwendeten, Kältemittel häufig ein hohes Treibhauspotenzial (GWP- Global Warming Potential), also ein hohes Klimaschädigungspotenzial bei einem Austreten. Andere bekannte Kältemittel mit einem vergleichsweise geringen Treibhauspotenzial, beispielsweise R-290 (Propan), sind sehr gut brennbar, wodurch entsprechende Sicherheitsmaßnahmen für im Inneren von Gebäuden zu installierende Heizgeräte (Wärmepumpen) notwendig werden.

Beispielsweise bei Split-Wärmepumpen, umfassend ein Außen- und einen Innenteil, die mittels eines Kältekreises verbunden sind, sollte eine von einer Leckage des Kältekreises und einem Austreten des Kältemittels ausgehende Explosionsgefahr Rechnung getragen werden. Hierzu wird in der EP 3 940 314 A1 eine Sicherheitsspülvorrichtung für eine Wärmepumpe vorgeschlagen, mit einem Gehäuse der Wärmepumpe aufweisend einen Anschluss für Außenluft und Abluft, wobei im Falle einer Leckage des Kältekreises verbunden mit einem Austreten von brennbarem Kältemittel ein Spülvorgang des Gehäuses eingeleitet wird. Auch die DE 10 2009 029 392 A1 beschreibt eine Kälteanlage, bei der eine Absaugvorrichtung im Falle einer Leckage ein gasdichtes Gehäuse der Anlage absaugt und so ausgetretenes brennbares Kältemittel entfernt.

Die vorgenannten Lösungen können jedoch ein Austreten von gefährlichem Kältemittel aus einem Kondensatablauf des Heizgerätes nicht oder nur ungenügend verhindern.

Hiervon ausgehend ist es Aufgabe der Erfindung, einen Kondensatablauf für ein Heizgerät, ein Gehäuse für ein Heizgerät und ein Heizgerät vorzuschlagen, die die geschilderten Probleme des Standes der Technik zumindest teilweise überwinden. Insbesondere soll die Erfindung im Falle einer Havarie ein Austreten von gefährlichem Kältemittel verhindern.

Zudem soll die Erfindung möglichst geringe bauliche Veränderungen gegenüber einem Heizgerät nach dem Stand der Technik erfordern, und so einfach und kostengünstig umsetzbar sein.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Kondensatablauf für ein Heizgerät bei, der dazu eingerichtet ist, im Inneren eines Gehäuses des Heizgerätes auftretendes Kondensat in einen Bereich außerhalb des Gehäuses abzuleiten, und zumindest einen Teilbereich, in dem ein Absorptionsmittel enthalten ist, umfasst.

Das Heizgerät kann insbesondere eine Wärmepumpe umfassen und dazu eingerichtet sein, ein Gebäude zu klimatisieren und/ oder Warmwasser bereitzustellen. Die Wärmepumpe kann einen Kältekreislauf aufweisen. Der Kältekreislauf kann ein Kältemittel zum Wärmetransport umwälzen, wobei das Kältemittel häufig einen Phasenwechsel flüssig/gasförmig zur Wärmeaufnahme und -abgabe vollzieht. Hierzu kann der Wärmepumpenkreislauf einen Verdampfer und einen Verflüssiger (Kondensator) umfassen, die jeweils mit einem Wärmetauscher in Wirkverbindung stehen. In der Regel ist der Verdampfer dazu eingerichtet Umgebungswärme aufzunehmen und der Verflüssiger diese beispielsweise auf einen Heizkreislauf oder einen Warmwasserspeicher zu übertragen.

Im Kältekreislauf kommt ein Verdichter zum Einsatz, auch als Kompressor bezeichnet, der dazu eingerichtet ist, das Kältemittel in einem Bereich des Wärmepumpenkreislaufes zu verdichten. Zudem kann ein Expansionsventil dazu eingerichtet sein, den Druck in einem Bereich des Kältekreislaufes zu mindern. Das Kältemittel kann insbesondere ein brennbares Kältemittel sein, beispielsweise R290 (Propan). Aufgrund der Brennbarkeit wird/kann ein Kältemittel auch als gefährliches Kältemittel bezeichnet werden.

Insbesondere auftretende niedrige Temperaturen an Komponenten des Kältekreislaufes können in Kontakt mit Umgebungsluft zu einer Kondensatbildung innerhalb eines Gehäuses des Heizgerätes führen. Um die Kondensatbildung zu mindern, sind verschiedene Möglichkeiten bekannt, beispielsweise werden häufig Komponenten des Kältekreislaufes bzw. des Heizgerätes, die eine niedrige Temperatur annehmen können, mit einer Dämmung versehen. Dadurch kann jedoch eine Kondensatbildung nicht vollständig verhindert werden, sodass Heizgeräte einen Kondensatablauf aufweisen. Dieser ist in der Regel in einem (geodätisch) unteren Bereich des Gehäuses angeordnet. Nachteilig kann, bei einer Leckage des Kältekreislaufes Kältemittel durch den Kondensatablauf austreten, was bei einem brennbaren Kältemittel mit einer Explosionsgefahr einhergeht. Häufig weist ein Kondensatablauf einen Siphon auf, in dem sich Kondensat sammeln kann und so ein Austreten von Kältemittel aus dem Gehäuse verhindert. Ein mit einer Leckage einhergehender Druckstoß kann jedoch das im Siphon enthaltende Kondensat ausblasen und in Folge kann Kältemittel aus dem Gehäuse durch den Kondensatablauf austreten. Nicht zuletzt kann auch eine längere Standzeit des Heizgerätes zu einem Verflüchtigen des Kondensats im Siphon führen.

Dem kann ein hier vorgeschlagener Kondensatablauf entgegenwirken. So kann ein Teilbereich des Kondensatablaufes, in dem ein Absorptionsmittel enthalten ist, den Kondensatablauf durchströmendes Kältemittel absorbieren und ein Austreten desselben aus dem Gehäuse durch den Kondensatablauf verhindern. Der Kondensatablauf kann eine (separate) Baugruppe, umfassend einen Kondensateinlass und eine Kondensatleitung und einen Kondensatauslass sein. Es ist möglich, dass eine Kondensatauffangwanne vorgesehen ist, an die der Kondensatablauf anordenbar oder angeordnet ist. Der Kondensatablauf kann eine Wandung hin zur Umgebung umfassen und insbesondere auch das Absorptionsmittel bzw. dessen Halteelement aufnehmen. Der Kondensatablauf kann einen Strömungsquerschnitt für Kondensat begrenzen.

Das Absorptionsmittel kann ein zur Absorption des Kältemittels geeignetes Absorptionsmittel sein und beispielsweise als Granulat vorliegen. Insbesondere kann das Absorptionsmittel Aktivkohle sein, also ein poröser, feinkörniger Kohlenstoff, der eine große (innere) Oberfläche zur Absorption bietet. Das Absorptionsmittel kann dabei als Schüttung im Kondensatablauf vorliegen oder in einem Träger (beispielsweise ein textile Gebilde, wie einem Vlies) eingebettet sein.

Der Teilbereich des Kondensatablaufes, in dem Absorptionsmittel enthalten ist, kann durch mindestens ein Halteelement begrenzt sein. Das Halteelement ist dabei ein gas- und flüssigkeitsdurchlässiges Element, das den gesamten zur Verfügung stehenden Strömungsquerschnitt des Kondensatablaufes abdeckt und so das Absorptionsmittel in dem Teilbereich des Kondensatablaufes fixiert.

Gemäß einer Ausgestaltung kann der Kondensatablauf einen Strömungswiderstand aufweisen, der größer dem Strömungswiderstand anderer Gehäuseausgänge ist. In der Regel wird ein weiterer Gehäuseausgang vorgesehen sein, sollten mehrere Gehäuseausgänge vorhanden sein, sollte der Strömungswiderstand des Kondensatablaufes größer dem Strömungswiderstand jedes anderen Gehäuseausganges sein.

Beispielsweise kann das Gehäuse eine Absorptionskammer, in oder an einer Gehäuseöffnung angeordnet, aufweisen, die, beispielsweise bei Auftreten einer Leckage, austretendes Kältemittel absorbieren kann. Hierbei sollte der Strömungswiderstand des Kondensatablaufes größer dem Strömungswiderstand des Gehäuseausganges durch die Absorptionskammer sein. So kann ein Austreten von gefährlichen Kältemittel durch den Kondensatablauf verhindert werden. Unter der Annahme einer weitestgehend gleichen Schüttdichte des Absorptionsmittels in Kondensatablauf und Absorptionskammer könnte somit der Strömungsweg durch das Absorptionsmittel im Kondensatablauf länger gewählt werden als der Strömungsweg durch das Absorptionsmittel in der Absorptionskammer.

Nach einem weiteren Aspekt wird auch ein Gehäuse für ein Heizgerät vorgeschlagen, umfassend einen hier angegebenen Kondensatablauf.

Gemäß einer Ausgestaltung kann das Gehäuse doppelwandig ausgeführt sein, wobei die beiden Wandungen einen Zwischenraum bilden, in dem der Kondensatablauf zumindest teilweise angeordnet sein kann. Dies betrifft insbesondere eine Unterseite des Gehäuses. Dabei kann der Zwischenraum mit Absorptionsmittel gefüllt sein. Insbesondere kann das Gehäuse einen Hauptausgangumfassen, in der ein Bereich mit Absorptionsmittel (Absorptionskammer) vorgesehen ist, der ausreichend dimensioniert ist, bei einer schlagartigen Expansion des Kältemittels dieses (vollständig) zu absorbieren und so ein Austreten in die Umgebung (des Gehäuses) zu verhindern.

Gemäß einer Ausgestaltung kann der Kondensatablauf durch den von einer doppelwandigen Ausführung der Unterseite (doppelwandige Bodenplatte) gebildeten Zwischenraum gebildet sein. Dabei kann der Zwischenraum einen Kanal bilden oder auch der gesamte Zwischenraum als Kondensatablauf ausgebildet sein. Hierzu kann die Unterseite beispielsweise aus zwei verbundenen Kunststoffelementen ausgeführt sein. Gleichfalls denkbar wäre, dass der Zwischenraum einen Kanal bildet, dessen Strömungsweg durch die Form eines Labyrinths (beispielsweise eine Mäanderform) verlängert werden kann.

Gemäß einer Ausgestaltung kann das Gehäuse zudem eine Ausnehmung (Öffnung) und einen Absorptionsmittelbehälter aufweisen, der derart angeordnet ist, dass bei einem Druckstoß (beispielsweise durch eine schlagartige Expansion des Kältemittels aufgrund einer Leckage des Kältekreislaufes) durch die Ausnehmung austretendes Kältemittel durch den Absorptionsmittelbehälter geleitet und dort absorbiert werden kann.

Nach einem weiteren Aspekt wird ein Heizgerät vorgeschlagen, aufweisend ein hier angegebenes Gehäuse oder einen hier angegebenen Kondensatablauf.

Gemäß einer Ausgestaltung kann der Kondensatablauf im Gehäuse zumindest teilweise senkrecht bezogen auf eine Einbauposition des Heizgerätes angeordnet sein und Ableitungen von Kondensat von Komponenten des Heizgerätes können derart angeordnet sein, dass diese dem Kondensatablauf zugeführt werden. Die Komponenten können dabei insbesondere ein Luftabscheider einer Entlüftungseinrichtung und/ oder ein Sicherheitsventil des Kältekreislaufes sein.

Nach einem weiteren Aspekt wird auch eine Verwendung eines Absorptionsmittels in einem Strömungsweg eines Kondensatablaufes eines Heizgerätes zum Verhindern eines Austretens von gefährlichem Kältemittel aus dem Heizgerät vorgeschlagen.

Die im Zusammenhang mit dem Kondensatablauf erörterten Details, Merkmale und vorteilhaften Ausgestaltungen können entsprechend auch bei dem hier vorgestellten Gehäuse und dem Heizgerät auftreten und umgekehrt. Insoweit wird auf die dortigen Ausführungen zur näheren Charakterisierung der Merkmale vollumfänglich Bezug genommen.

Hier werden somit ein Kondensatablauf für ein Heizgerät, ein Gehäuse eines Heizgerätes und ein Heizgerät angegeben, welche die mit Bezug auf den Stand der Technik geschilderten Probleme zumindest teilweise lösen. Insbesondere tragen der Kondensatablauf, das Gehäuse sowie das Heizgerät zumindest dazu bei, einen sicheren Betrieb eines Heizgerätes, insbesondere aufweisend einen Kältekreislauf mit einem brennbaren Kältemittel, zu ermöglichen. Weiter vorteilhaft kann eine Umrüstung eines Kältekreislaufes auf ein umweltfreundliches Kältemittel durch einen einfachen Austausch des Kondensatablaufes mit einem hier vorgeschlagenen Kondensatablauf unterstützt werden.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein hier vorgeschlagenes Heizgerät,
- Fig. 2:: einen hier vorgeschlagenen Kondensatablauf,
- Fig. 3:: ein hier vorgeschlagenes Heizgerät mit einer alternativen Ausgestaltung des Kondensatablaufes.

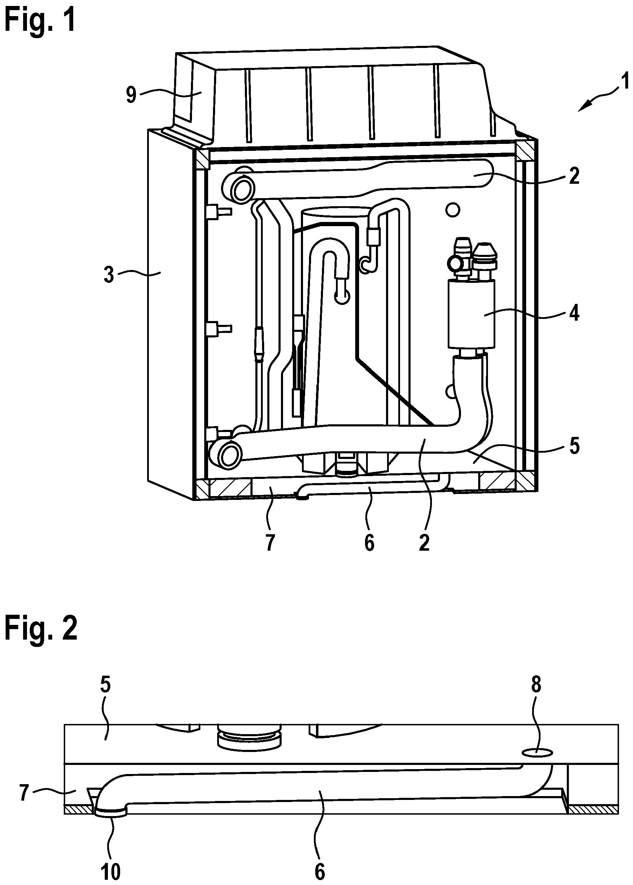

Fig. 1 zeigt beispielhaft und schematisch ein Heizgerät 1, umfassend einen Kältekreislauf 2. Das Heizgerät 1 kann als Innenteil einer Wärmepumpenanlage in einem Gebäude angeordnet sein, wobei der Kältekreislauf 2 mit einem Außenteil, zur Aufnahme von Umgebungswärme in Wirkverbindung stehen kann. Der Kältekreislauf 2 kann insbesondere mit einem gefährlichen Kältemittel befüllt sein, beispielsweise dem brennbaren R290 (Propan).

Das Heizgerät 1 kann ein Gehäuse 3 aufweisen, das doppelwandig ausgeführt sein kann. In einem aufgrund der doppelwandigen Ausführung gebildeten Zwischenraum 7 zwischen beiden Wandungen kann gleichfalls Absorptionsmittel enthalten sein. Im Gehäuse 3 können verschiedene Komponenten 4 des Heizgerätes 1 angeordnet sein, beispielsweise ein Luftabscheider mit einem Sicherheitsventil und/ oder ein Schnellentlüfter, an denen sich Kondensat bilden oder aus denen (im Rahmen eines Entlüftungsvorganges) beispielsweise Soleflüssigkeit eines Solekreislaufes austreten kann. Das Gehäuse 4 kann zudem einen Absorptionsmittelbehälter 9 umfassen, der an einer Ausnehmung des Gehäuses 4 derart angeordnet ist, dass gegebenenfalls, beispielsweise aufgrund einer Leckage des Kältekreislaufes 2, durch die Ausnehmung austretendes Kältemittel durch den Absorptionsmittelbehälter 9 strömen muss und absorbiert wird. Das Gehäuse 3 kann eine Bodenplatte 5 umfassen, die gleichfalls doppelwandig ausgeführt sein kann.

Fig. 2 zeigt beispielhaft eine nähere Darstellung der Bodenplatte 5 des Gehäuses 3. Ein Kondensatablauf 6 kann zumindest teilweise in dem Zwischenraum 7 angeordnet sein und eine erste Öffnung 8 im Inneren des Gehäuses 3 mit einer zweiten Öffnung 10 außen am Gehäuse 4 derart verbinden, das Kondensat durch die erste Öffnung 8, den Kondensatablauf 6 und die zweite Öffnung 10 aus dem Gehäuse 3 auslaufen kann.

Der Kondensatablauf 6 kann einen Teilbereich umfassen, der mit einem Absorptionsmittel, im vorliegenden Beispiel Aktivkohlegranulat, gefüllt ist und gegebenenfalls durch den Kondensatablauf 6 austretendes Kältemittel absorbiert.

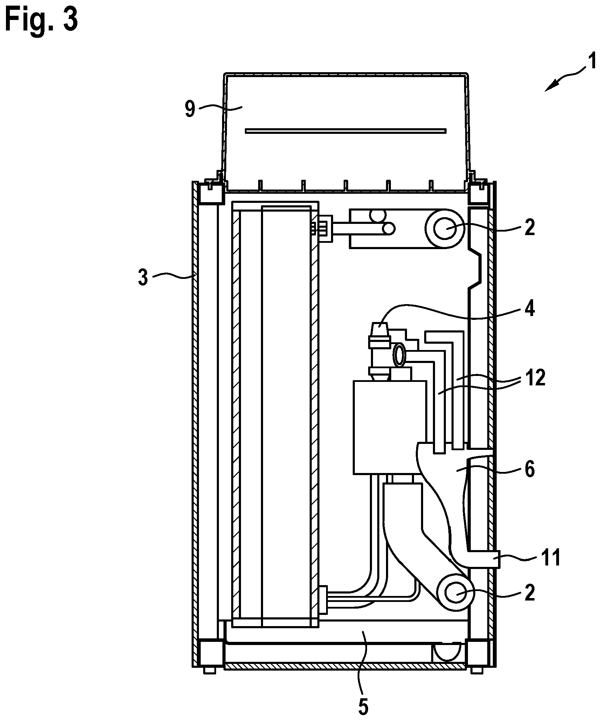

Fig. 3 zeigt beispielhaft eine alternative Ausgestaltung des Kondensatablaufes 6. Dieser kann zumindest teilweise senkrecht im Gehäuse 3 derart angeordnet sein, dass Ableitungen 12 von Komponenten 4, wie einem Luftabscheider mit einem Sicherheitsventil und/ oder einem Schnellentlüfter, Kondensat zum Kondensatablauf 6 leiten können. Der Kondensatablauf 6 kann zu einer seitlichen Öffnung 11 des Gehäuses 3 führen.

Aus der seitlichen Öffnung 11 oder der zweiten Öffnung 10 in der Bodenplatte 5 kann das Kondensat über eine (hier nicht gezeigte) Leitung einem geeigneten Ablauf bzw. dem Abwasser zugeführt werden.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

### Bezugszeichenliste

- 1: Heizgerät
- 2: Kältekreislauf
- 3: Gehäuse
- 4: Komponente
- 5: Bodenplatte
- 6: Kondensatablauf
- 7: Zwischenraum
- 8: erste Öffnung
- 9: Absorptionsmittelbehälter
- 10: zweite Öffnung
- 11: seitliche Öffnung
- 12: Ableitung

## Patentansprüche

1. Kondensatablauf (6) für ein Heizgerät (1), dazu eingerichtet im Inneren eines Gehäuses (3) des Heizgerätes (1) auftretendes Kondensat in einen Bereich außerhalb des Gehäuses (3) abzuleiten, umfassend zumindest einen Teilbereich, in dem ein Absorptionsmittel enthalten ist.

2. Kondensatablauf (6) nach Anspruch 1, wobei das Absorptionsmittel Aktivkohle ist.

3. Kondensatablauf (6) nach einem der vorangehenden Ansprüche, wobei der Strömungswiderstand des Kondensatablaufes (6) größer dem Strömungswiderstand anderer Ausgänge des Gehäuses (3) ist.

4. Kondensatablauf (6) nach einem der vorangehenden Ansprüche, wobei das Absorptionsmittel zwischen zwei gas- und flüssigkeitsdurchlässigen Halteelementen angeordnet ist.

5. Gehäuse (3) für ein Heizgerät (1), umfassend einen Kondensatablauf (6) nach einem der vorangehenden Ansprüche.

6. Gehäuse (3) nach Anspruch 5, wobei das Gehäuse (3) doppelwandig ausgeführt ist und die beiden Wandungen einen Zwischenraum (7) bilden, in dem der Kondensatablauf (6) zumindest teilweise angeordnet ist.

7. Gehäuse (3) nach Anspruch 6, wobei das Gehäuse (3) der Zwischenraum (7) zumindest teilweise den Kondensatablauf (6) ausbildet.

8. Gehäuse (3) nach Anspruch 6, wobei der Kondensatablauf (6) zumindest teilweise in einer doppelwandigen Bodenplatte (5) des Gehäuses (3) angeordnet ist.

9. Heizgerät (1), aufweisend ein Gehäuse (3) nach einem der Ansprüche 5 bis 8.

10. Heizgerät (1) nach Anspruch 9, wobei der Kondensatablauf (1) zumindest teilweise senkrecht bezogen auf eine Einbauposition innerhalb des Gehäuses (3) angeordnet ist und mindestens eine Ableitung (12) von mindestens einer Komponente (4) des Heizgerätes (1) derart angeordnet ist, dass sich an der Komponente (4) bildendes Kondensat dem Kondensatablauf (6) zugeführt wird.

11. Verwendung eines Absorptionsmittels in einem Strömungsweg eines Kondensatablaufes (6) eines Heizgerätes (1) zum Verhindern eines Austretens von Kältemittel aus dem Gehäuse (3) des Heizgerätes (1).
